# EUROPEAN PATENT APPLICATION

(11) **EP 2 523 070 A2**
(43) Date of publication of application: **14.11.2012**
(21) Application number: 12166267.0
(22) Date of filing: 01.05.2012
(51) Int. Cl.: G06F 3/023, G06F 3/048, G06F 3/01

(54) **Input processing for character matching and predicted word matching**

(30) Priority: 13.05.2011 US 201113107833
(71) Applicant: Research In Motion Limited, Waterloo, ON N2L 3W8 (CA)
(72) Inventor: Nanda Gilani, Parul, Mississauga, Ontario L5R 0B4 (CA); Shelley, Gabriel Lee Gilbert, Waterloo, Ontario N2L 3W8 (CA)
(74) Representative: Moore, Barry

(57) **Abstract**

A mobile computing device that operates a method that processes handwritten user input for character matching and predictive word matching. A user inputs handwritten input on a touch-sensitive display using, for example, a stylus. The method determines and displays a set of candidate character matches for the handwritten input. The user then selects a character from the candidate character matches. The method determines and displays a set of candidate predicted word matches based on the user selected character match. The user can then select to input a desired candidate predicted word match.

## Description

### FIELD OF TECHNOLOGY

This disclosure relates to input processing for character matching and predicted word matching on mobile computing devices and, more particularly, on a portable electronic device.

### INTRODUCTION

Mobile computing devices such as, for example, portable electronic devices including tablet computers, mobile phones, smart phones, and personal digital assistants are becoming increasingly popular across different regions of the world. With this spread of popularity, there is a new found demand for mobile computing devices that can operate effectively using different languages.

Many nationalities across the world still heavily rely on handwriting to input their native language characters onto mobile computing devices. Existing mobile computing devices are often unable to provide efficient text entry solutions for handwritten input. Thus, users of conventional mobile computing devices that rely on handwritten input struggle with cumbersome text input options.

### BRIEF DESCRIPTION OF THE DRAWINGS

Example embodiments of the present disclosure will now be described, by way of example only, with reference to the attached figures, wherein:

Figure 1 is a simplified block diagram of components including internal components of a portable electronic device according to one example embodiment;

Figure 2 is a view of a portable electronic device according to one example embodiment;

Figure 3 is a flowchart illustrating a method of processing input for character matching and predicted word matching according to one example embodiment;

Figure 4 is a view of a character input user-interface on the screen of the handheld device according to one example embodiment;

Figure 5 is a view of a character matching user-interface according to one example embodiment;

Figure 6 is a view of a character matching and predicted word matching user-interface according to one example embodiment;

Figure 7 is a view of an accepted text input user-interface according to one example embodiment; and

Figure 8 is a view of an additional character matching and additional predicted word matching user-interface according to one example embodiment.

### DETAILED DESCRIPTION

The following describes the processing of character input that includes matching characters to the character input of a user and predicting words based on a selected character.

It will be appreciated that for simplicity and clarity of illustration, where considered appropriate, reference numerals are repeated among the figures to indicate corresponding or analogous elements. In addition, numerous specific details are set forth in order to provide a thorough understanding of the example embodiments described herein. However, it will be understood by those of ordinary skill in the art that the example embodiments described herein are practiced without these specific details.

In other instances, well-known methods, procedures and components have not been described in detail so as not to obscure the example embodiments described herein. Also, the description is not to be considered as limited to the scope of the example embodiments described herein.

The disclosure relates to mobile computing devices, such as a portable electronic device. Examples of portable electronic devices include mobile, or handheld, wireless communication devices such as pagers, cellular phones, cellular smart-phones, wireless organizers, personal digital assistants, tablet computers, netbooks, wirelessly enabled notebook computers, and so forth. In certain example embodiments, the portable electronic device is a portable electronic device without wireless communication capabilities, such as a handheld electronic game device, digital photograph album, digital camera, or other portable device.

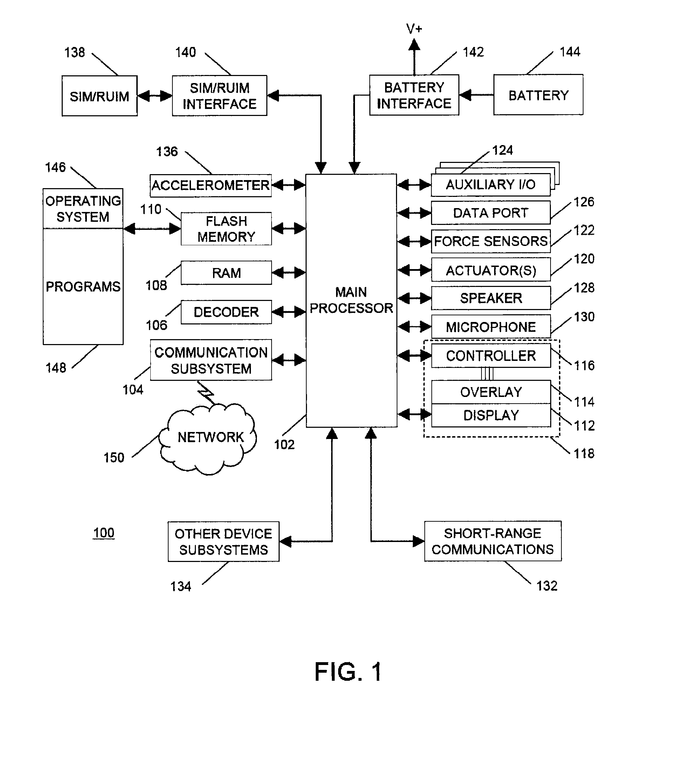

A block diagram of an example of a portable electronic device 100 is shown in Figure 1. Portable electronic device 100 includes multiple components, such as processor 102 that controls the overall operation of the portable electronic device 100. Processor 102 is, for instance, and without limitation, a microprocessor (µP). Communication functions, including data and voice communications, are performed through communication subsystem 104. Data received by the portable electronic device 100 is optionally decompressed and decrypted by a decoder 106. Communication subsystem 104 receives messages from and sends messages to a wireless network 150. Wireless network 150 is any type of wireless network, including, but not limited to, data wireless networks, voice wireless networks, and networks that support both voice and data communications. Power source 142, such as one or more rechargeable batteries or a port to an external power supply, powers portable electronic device 100.

Processor 102 interacts with other components, such as Random Access Memory (RAM) 108, memory 110, and display 112. In example embodiments, display 112 has a touch-sensitive overlay 114 operably connected or coupled to an electronic controller 116 that together comprise touch-sensitive display 112. Processor 102 interacts with touch-sensitive overlay 114 via electronic controller 116. User-interaction with a graphical user interface is performed through the touch-sensitive overlay 114. Information, such as text, characters, symbols, images, icons, and other items that are displayed or rendered on portable electronic device 100, are displayed on the display 112 via the processor 102. Although described as a touch-sensitive display with regard to Figure 1, display 112 is not limited to a touch-sensitive display and can include any display screen for portable devices.

Processor 102 also interacts with one or more actuators 120, one or more force sensors 122, auxiliary input/output (I/O) subsystem 124, data port 126, speaker 128, microphone 130, short-range communications 132, and other device subsystems 134. Processor 102 interacts with accelerometer 136, which is utilized to detect direction of gravitational forces or gravity-induced reaction forces.

To identify a subscriber for network access, portable electronic device 100 uses a Subscriber Identity Module or a Removable User Identity Module (SIM/RUIM) card 138 for communication with a network, such as wireless network 150. In other example embodiments, user identification information is programmed into memory 110.

Portable electronic device 100 includes operating system 146 and software programs or components 148 that are executed by processor 102 and are stored in a persistent, updatable store such as memory 110. Additional applications or programs are loaded onto portable electronic device 100 through wireless network 150, auxiliary I/O subsystem 124, data port 126, short-range communications subsystem 132, or any other suitable subsystem 134.

A received signal such as a text message, an e-mail message, or web page download is processed by communication subsystem 104 and input to processor 102. Processor 102 processes the received signal for output to display 112 and/or to auxiliary I/O subsystem 124. A subscriber generates data items, for example e-mail or text messages, which are transmitted over wireless network 150 through communication subsystem 104. For voice communications, the overall operation of the portable electronic device 100 is similar. Speaker 128 outputs audible information converted from electrical signals, and microphone 130 converts audible information into electrical signals for processing. Speaker 128, display 112, and data port 126 are considered output apparatuses of device 100.

In example embodiments, display 112 is any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes capacitive touch-sensitive overlay 114. Overlay 114 is an assembly of multiple layers in a stack including, for example, a substrate, a ground shield layer, a barrier layer, one or more capacitive touch sensor layers separated by a substrate or other barrier, and a cover. The capacitive touch sensor layers are any suitable material, such as patterned indium tin oxide (ITO).

One or more touches, also known as touch contacts, touch events, or actuations, are detected by touch-sensitive display 112. Controller 116 or processor 102 determines attributes of the touch, including a location of a touch. Touch location data includes an area of contact or a single point of contact, such as a point at or near a center of the area of contact. The location of a detected touch includes x and y components, e.g., horizontal and vertical components, respectively, with respect to one's view of touch-sensitive display 112. For example, the x location component is determined by a signal generated from one touch sensor, and the y location component is determined by a signal generated from another touch sensor. A signal is provided to controller 116 in response to detection of a touch. A touch is detected from any suitable object, such as a finger, thumb, appendage, or other items, for example, a stylus, pen, or other pointer, depending on the nature of touch-sensitive display 112. In example embodiments, multiple simultaneous touches are also detected. These multiple simultaneous touches are considered chording events.

Portable device 100 includes input device 119. In example embodiments, an input device includes an optical trackpad, a mouse, a trackball, or a scroll wheel. In other example embodiments, input device 119 includes an area of touch-sensitive display 112 that uses an object such as a finger, thumb, appendage, stylus, pen, or other pointer for input. Input device 119 assists a user in selection and scrolling inputs.

While the above description provides examples of one or more processes or apparatuses, it will be appreciated that other processes or apparatuses is within the scope of the accompanying claims.

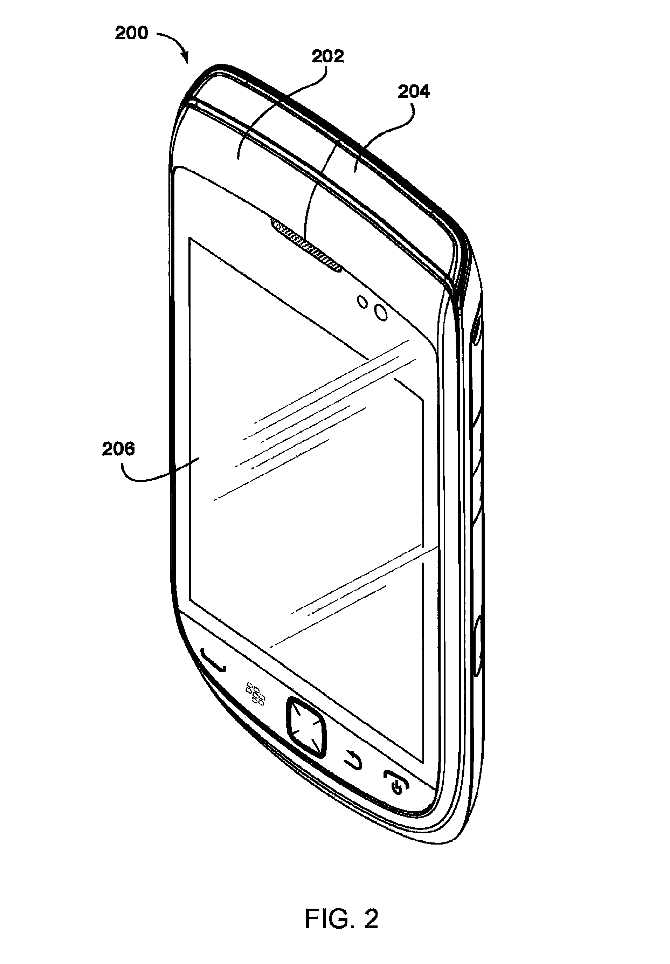

Turning now to Figures 2, illustrated is a portable electronic device 200 according to one embodiment. The portable electronic device includes a upper portion 202 and a base portion 204. In an embodiment, the upper portion 202 and base portion 204 are coupled together and are slidable between a closed position and an open position. In another embodiment, the upper portion 202 and base portion 204 are not slidable.

The upper portion 202 includes a display 206, which is an LCD display and which has touch screen capabilities. In some embodiments, the display 206 is the same as or similar to the display 118 as described above. In another embodiment, the display 206 is not an LCD display and is not the same as or similar to display 118.

In an embodiment, one or both of the upper portion 202 and base portion 204 include one or more input apparatus, such as navigation keys or buttons, a physical or virtual keyboard, a trackpad, a trackball, multimedia keys, etc. In another embodiment, the upper portion 202 and base portion 204 do not include input apparatus. In one embodiment, the upper portion 202 includes an auxiliary input device. The auxiliary input is an optical navigation module (e.g. a trackpad) that responds to user interaction, and which is used for navigating around the display screen 206, to select objects on the display screen, or for other purposes. In another embodiment, the upper portion 202 does not include an auxiliary input.

In an embodiment, the upper portion 202 also includes other input devices, such as a dedicated phone application button, a dedicated "disconnect call" button, a home screen button, etc. In various embodiments, these input devices include optical sensors, mechanical buttons, or both. In another embodiment, the upper portion 202 does not include other input devices.

Turning now to the base portion 204, the base portion 204 includes various buttons and other controls used for navigation, to control volume or for other purposes. In another embodiment, the base portion 204 does not include various buttons and other controls used for navigation, to control volume or for other purposes.

In an embodiment, the base portion 204 also includes one or more input or output ports, (e.g. I/O ports), such as a microUSB port. In some examples, the port is used for data communication with the portable electronic device 200, for charging of a battery (not shown, but which could for example be battery 144) on the device 200 or for both. In another embodiment, the base portion 204 does not include input or output ports.

In an embodiment, the base portion 204 includes a battery cover for covering the battery (e.g. battery 144, not shown). In some embodiments, the battery cover is removable. In other embodiments, the battery cover is permanently fixed to the device. In another embodiment, the base portion 204 does not include a battery cover.

In some embodiments, the base portion 204 includes an audio jack. The audio jack is used to couple the portable electronic device 200 to a speaker, a microphone, or both, for example for use in voice communication, for listening to music on the portable electronic device 200, etc. In another embodiment, the base portion 204 does not include an audio jack.

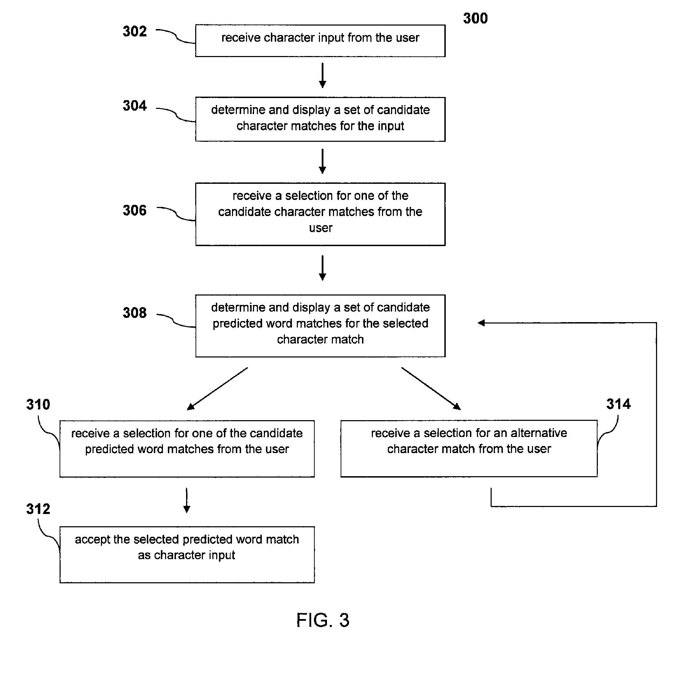

Turning to Figure 3, example method 300 is a flow diagram for character matching and predicted word matching. The method is carried out by software or firmware instructions stored, for example as part of programs 148, stored in Random Access Memory (RAM) 108 or memory 110, for being executed by, for example, processor 102 as described herein, or by controller 116.

At Step 302, processor 102 receives character input from the user. In an example embodiment, touch-sensitive display 112 receives character input from the user, for example, via a stylus, pen, or other pointer. In step 304, processor 102 determines and displays a set of candidate character matches for the input. In an example embodiment, processor 102 determines a set of candidate characters matches based on, for example, one or more of the character input from the user, the language of the character input, symbol characters, and any other disambiguation factors commonly known in the art. In step 306, processor 102 receives a selection for one of the candidate character matches. In an example embodiment, touch-sensitive display 112 receives the selection from the user, for example, via a stylus, pen, other pointer, or input device, as well as by touch.

In Step 308, processor 102 determines and displays a set of candidate predicted word matches for the selected character match. In an example embodiment, processor 102 can determine a set of candidate predicted word matches based on, for example, one or more of the character selection from the user, the language of the selected character, the characters previously input, a dictionary, and any other word prediction factors commonly known in the art. In another example embodiment, the candidate predicted word matches can be based on an analysis of the words that have been previously entered by the user and logged by the portable electronic device 100. For example, the words that the user has previously entered can be stored in memory 110 and analyzed to determine the user's tendencies such as frequency of use of the word. The selected character can then be analyzed along with these tendencies, and any other suitable factors, to determine the candidate predicted word matches.

If the user then selects one of the candidate predicted word matches, the process moves to step 310. In step 310, processor 102 receives a selection for one of the candidate predicted word matches from the user. In an embodiment, touch-sensitive display 112 receives the selection from the user, for example, via a stylus, pen, other pointer, or input device, as well as by touch. In step 312, processor 102 accepts the selected word match as character input for displaying on a screen display. However, after step 308, if the user instead selects an alternative candidate character match, the process moves to step 314. In step 314, processor 102 receives a selection for an alternative character match from the user. In an example embodiment, touch-sensitive display 112 receives a selection from the user, for example, via a stylus, pen, other pointer, or input device, as well as by touch. In an example embodiment, the process returns to step 308 and determines and displays a set of candidate predicted word matches for the alternative selected character match. From step 308, the process continues until a word or character is selected for input.

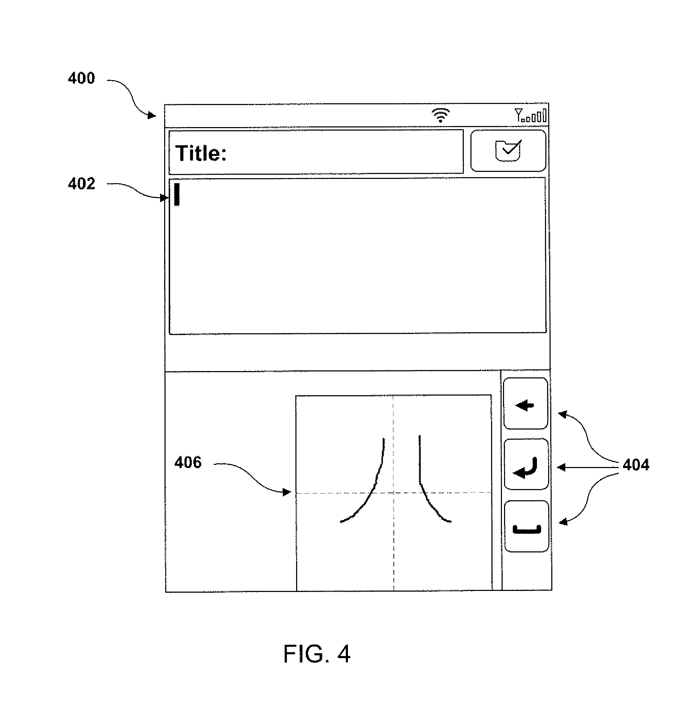

An example of a process using a touch-sensitive display and a user-interface to select a character or predicted word as input is explained using Figures 4-8. In the present example, Japanese characters and symbols are used, however any language, set of characters, or symbols can be used to practice the process, including other Latin character, Greek characters, and Asian characters, such as Hindi characters, Urdu characters, Chinese characters, and others.

Figure 4 is an example user-interface on a portable electronic device used to accomplish the example process. The example user-interface embodied in Figure 4 is displayed on the touch-sensitive display 112 of the portable electronic device. Processor 102 executes programs from the software programs or components 148 of the portable electronic device to display the example user-interface on touch-sensitive display 112.

Display 400 of Figure 4 is a layout of the user-interface for receiving character input from the user. The user-interface includes text field 402 for displaying characters and words accepted as input from the user. Text field 402 can also include a cursor that indicates the position of entry within text field 402 for any newly inputted character or word. The user-interface can also contain buttons 404. These buttons perform certain functions or tasks related to character or word input. For instance, a delete/backspace button can erase inputted characters in text field 402, a space button can input a white space character into text field 402, and a return button can input a new line or line break character into text field 402.

In an embodiment, the user-interface additionally includes character input field 406 for receiving character input from the user. The user draws or writes handwritten input, for example, via a stylus, pen, or other pointer in character input field 406. The processor 102 can compare the character input to characters or words in a dictionary or any other suitable reference source to determine candidate characters for the input. For example, the character input can be compared against Japanese characters or words from a Japanese dictionary to determine candidate characters. These candidate characters can then be displayed to the user. This process is further described above for step 304 of the example process of Figure 3.

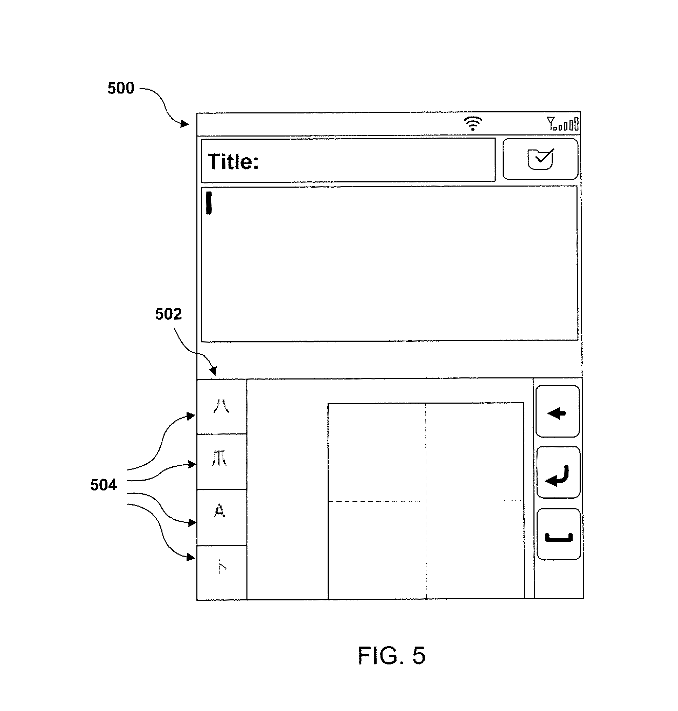

Figure 5 displays an example view of a user-interface after a user has written or drawn character input in character input field 406 of Figure 4. Display 500 is a layout of the user-interface for receiving character input from the user similar to display 400 of Figure 4. After a user has input character input in character input field 406 of Figure 4, processor 102 determines and displays a set of candidate character matches for the input, as further described above for step 304 of the example process of Figure 3.

Column 502 is an example data structure to display the set of candidate character matches to the user. In an embodiment, column 502 is made up of one or more tabs. Each tab displays a candidate character match. For example, tabs 504 display Japanese candidate character matches based on the inputted character input of the user. Each tab is selectable by the user for example, via a stylus, pen, other pointer, or input device, as well as by touch. In an embodiment, each of the candidate character matches of tabs 504 comprises a single character.

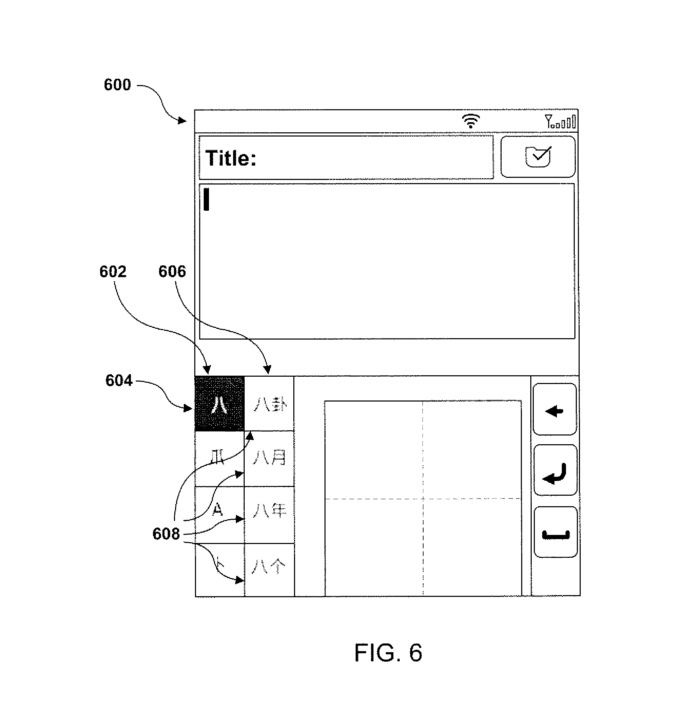

Figure 6 displays an example view of a user-interface after a user selects a tab 504 of Figure 5. Display 600 is a general layout of the user-interface for receiving character input from the user similar to display 500 of Figure 5. After a user selects a candidate character match of a tab 504 of Figure 5, processor 102 determines and displays a set of candidate predicted word matches based on the selected character, as further described above for step 308 of the example process of Figure 3.

Column 602 is an example data structure to display the set of candidate character matches to the user similar to column 502 of Figure 5. In an embodiment, column 602 is made up of one or more selectable tabs. Each tab displays a candidate character match. In an example, the user has selected the candidate character match of tab 604. Tab 604 is highlighted to indicate that it has been selected. Column 606 is an example data structure to display a set of candidate predicted word matches to the user. In an embodiment, column 606 is made up of one or more tabs. Each tab displays a candidate predicted word match. For example, tabs 608 display Japanese predicted word matches for the previously selected character. Each tab is selectable by the user. For example, each of the tabs 608 can be selected by the user via a stylus, pen, other pointer, or input device, as well as by touch.

In an embodiment, columns 602 and 606 are adjacent to each other. In an alternative embodiment, at least one of the candidate predicted word matches of tabs 608 begins with the selected character. In another alternative embodiment, each of the candidate predicted word matches of tabs 608 begins with the selected character.

In an alternative embodiment, processor 102 automatically selects the most probable character match from the set of candidate character matches. The most probable match can be determined, for example, by using an appropriate algorithm in conjunction with handwriting character recognition software. The probability threshold for determining a match can be adjusted based on preferences set, for instance, by a manufacturer. The Blackberry® Torch™ is an example of a device that performs character recognition for handwritten input. In an embodiment, processor 102 determines and displays a set of candidate predictive word matches based on the automatically selected character match.

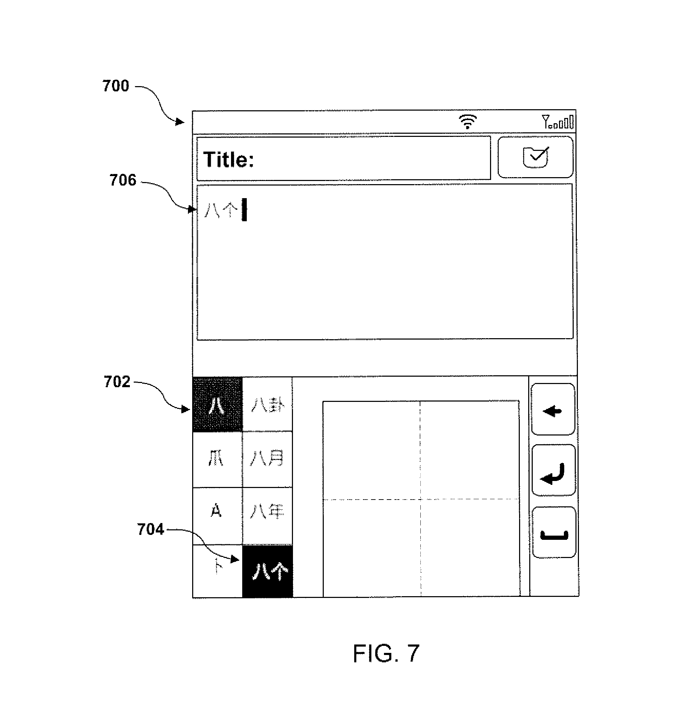

Figure 7 displays an example view of a user-interface after a user selects a tab 608 of Figure 6. Display 700 is a layout of the user-interface for receiving character input from the user similar to display 600 of Figure 6. In an embodiment, after a user selects a candidate predicted word match of a tab 608 of Figure 6, processor 102 receives the selection of the candidate predicted word match and accepts the selected predicted word as input for display in the display screen 706, as further described above for step 310 and 312 of the example process of Figure 3.

In an embodiment, tab 702 is highlighted to indicate that the candidate character match of tab 702 has been previously selected by the user. Similarly, tab 704 is highlighted to indicate that the candidate predicted word match of tab 704 has been previously selected by the user. In this example, the selected predicted word match of tab 704 is accepted as input. In an embodiment, the selected predicted word match of tab 704 is displayed in the text field 706.

In an alternative embodiment, tab 702 is highlighted to indicate that the candidate character match of tab 702 has been previously selected by the user. But the user does not select the candidate predicted word match of tab 704 and instead redundantly selects the previously selected character match of tab 702. In this example, the redundantly selected character match of tab 702 is accepted as input. In an embodiment, the accepted input of the redundantly selected character match of tab 702 is displayed in the text field 706.

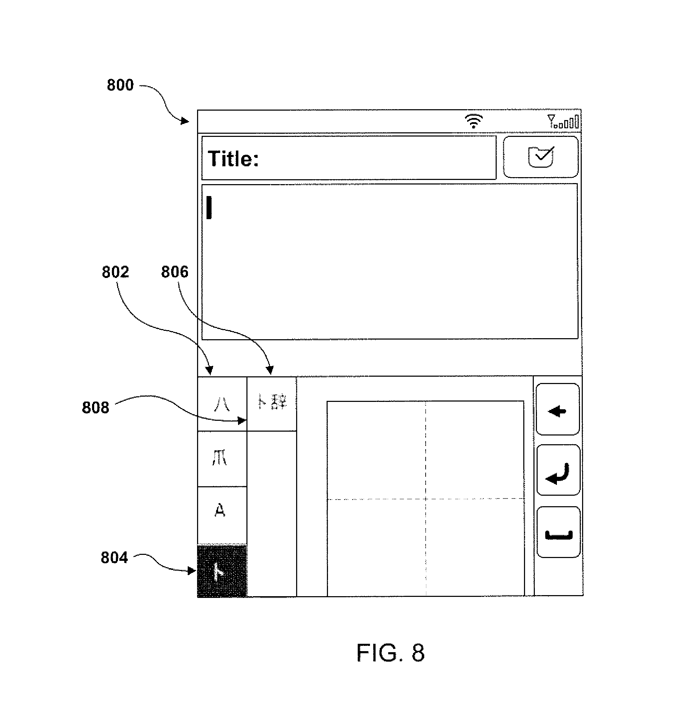

In an alternative embodiment, Figure 8 displays an example view of a user-interface after a user selects an alternative candidate character tab from column 602 of Figure 6. Display 800 is a layout of the user-interface for receiving character input from the user similar to display 600 of Figure 6. After a user selects an alternative candidate character tab from column 602 of Figure 6, processor 102 receives the selection of the alternative candidate character match. In an embodiment, processor 102 determines and displays a set of alternative candidate predicted word matches for the alternative selected character match, as further described above for step 314 and 308 of the example process of Figure 3.

In an embodiment, tab 804 in column 802 is highlighted to indicate that the user selected the candidate character match of tab 804 as an alternative character match. In this example, column 806 is repopulated with a set of alternative candidate predicted word matches, such as tab 808, based on the alternative selected character of tab 804. In an embodiment, the process continues until a word or character is selected for input.

Particular embodiments of the subject matter described can be implemented to realize one or more of the following advantages. A User that inputs handwritten characters on a mobile device may ultimately input a desired word with more efficiency. Also, aspects the user-interface including the multi-column display allow for a cleaner design and more user friendly interaction.

While specific embodiments have been described in detail, it will be appreciated by those skilled in the art that various modifications and alternatives to those details could be developed in light of the overall teachings of the disclosure. Accordingly, the particular arrangements disclosed are meant to be illustrative only and not limiting.

## Claims

1. A method for processing character input on a portable electronic device, the method comprising:
receiving character input from a user;
analyzing the input to determine a set of candidate character matches for the input;
displaying the candidate character matches as tabs in a first column;
receiving a selection for one of the candidate character matches;
determining a set of candidate predicted word matches based on the selected character match; and
displaying the candidate predicted word matches as tabs in a second column,
wherein the device is capable of receiving a selection for an alternative candidate character match and determining a set of alternative candidate predicted word matches based on the alternative selected character match.

2. The method of claim 1, wherein the character input received comprises handwritten character input.

3. The method of claim 1 or 2, wherein the first column displayed is adjacent to the second column displayed.

4. The method of any preceding claim, wherein at least one of the candidate predicted word matches determined begins with the selected character match.

5. The method of any preceding claim, wherein each of the candidate character matches determined comprises a single character.

6. The method of any preceding claim, further comprising at least one of:
receiving a selection for one of the candidate predicted word matches; and accepting the selected predicted word match as input.

7. The method of any preceding claim, further comprising:
receiving a redundant selection for the selected character match after displaying the candidate predicted word matches; and
accepting the redundantly selected character match as input.

8. The method of any preceding claim, further comprising:
receiving an alternative selection for one of the candidate character matches;
determining a set of alternative candidate predicted word matches based on the selected alternative character match; and
displaying the alternative candidate predicted word matches as tabs in the second column.

9. The electronic device of claim 8, further comprising:
receiving a selection for one of the alternative candidate predicted word matches; and
accepting the selected alternative predicted word match as input.

10. The method of any preceding claim, wherein a most probable candidate character match from the set of candidate characters matches is automatically selected, and determining and displaying the set of candidate predicted word matches based on the selected character is automatically performed.

11. An electronic device for processing character input, the device comprising:
a processor coupled to a memory;
the memory having stored therein instructions, the instructions being executable on the processor, which, when executed on the electronic device, cause the electronic device to perform the method of any preceding claim.

12. A computer program which when executed on a processor is configured to carry out the method steps of any one of claims 1 to 10.
